# EUROPEAN PATENT APPLICATION

(11) **EP 4 464 916 A1**
(43) Date of publication of application: **20.11.2024**
(21) Application number: 22920214.8
(22) Date of filing: 12.01.2022
(51) Int. Cl.: F16H 1/32, H02K 7/116, H01R 31/06

(54) **MACHINE WITH HOLLOW PORTION FOR ELECTRICAL WIRING**

(71) Applicant: Harmonic Drive Systems Inc., Shinagawa-ku Tokyo 140-0013 (JP)
(72) Inventor: SHIROKOSHI Norio, Azumino-shi, Nagano 399-8305 (JP)
(74) Representative: TBK
(86) International application number: PCT/JP2022/000775
(87) International publication number: WO 2023/135688

(57) **Abstract**

A shaft member (100), in which electrical wiring (111, 112) and connectors (131, 132) are integrally formed, is disposed on a hollow portion (10) for electrical wiring that extends through the center of a wave gear device (1). The connectors (131, 132) attached to first and second shaft ends (101, 102) on both sides of the shaft member (100) are each exposed to outside from both ends of the hollow portion (10). During wiring work, external wiring or the like need merely be attached to respective terminals of the connectors (131, 132) exposed to outside. It is possible to reduce the risk of disconnection caused by sliding or twisting of the electrical wiring, without the electrical wiring contacting a hollow input shaft (41) forming the hollow portion (10), an end of a second end plate (7), etc. Constraints on the number of wires and wire diameter are also alleviated, and wiring work also becomes simple.

## Description

### TECHNICAL FIELD

The present invention relates to a machine such as a hollow reducer or hollow motor through which electrical wiring is led via a hollow portion extending through a central portion of a machine body in an axial direction.

### BACKGROUND ART

In reducers, electric motors, and other machines, there are cases where a hollow portion extending in an axial direction is formed through a central portion of a machine body in order to thread electrical wiring through the machine body. For example, an input shaft of a reducer and a rotating shaft of an electric motor are configured as hollow shafts, and electrical wiring is led therethrough via hollow portions in the hollow shafts. Patent Literature 1 discloses a hollow actuator comprising an electric motor and a reducer, each of which is provided with a hollow portion through which electrical wiring can be threaded. Additionally, in the direct drive motor disclosed in Patent Literature 2, a cylinder body is press-fitted, in a state allowing rotation, into the inner peripheral surface of a hollow portion in a fixed shaft, and electrical wiring is threaded through the interior of the cylinder body.

### PRIOR-ART LITERATURE

### PATENT LITERATURE

Patent Literature 1: JP 2002-243000 A
Patent Literature 2: JP 2006-296046 A

### DISCLOSURE OF THE INVENTION

### PROBLEMS TO BE SOLVED BY THE INVENTION

When electrical wiring is threaded through a hollow portion formed in a reducer, motor, or other machine, there is a risk of disconnection due to sliding or twisting of the electrical wiring in an open-end portion of the hollow portion. Constraints will also be imposed in regard to the quantity, wire diameter, and other attributes of the wiring being threaded through if the machine has a structure in which the hollow diameter cannot be increased.

In view of the aforementioned issues, it is an object of the present invention to provide a machine provided with a hollow portion for electrical wiring, configured so that the risk of disconnection can be reduced and constraints on the quantity, wire diameter, and other attributes of wiring can be mitigated.

### MEANS USED TO SOLVE THE ABOVE-MENTIONED PROBLEMS

In order to solve the aforementioned problem, the machine provided with a hollow portion for electrical wiring according to the present invention is characterized by comprising:
a machine body;
a hollow portion extending through a central portion of the machine body in an axial direction;
a shaft member positioned in the hollow portion;
a first shaft end portion of the shaft member, the first shaft end portion being exposed at a first open end on one side of the hollow portion;
a second shaft end portion of the shaft member, the second shaft end portion being exposed at a second open end on the other side of the hollow portion;
electrical wiring positioned inside the shaft member or integrally molded with the shaft member, the electrical wiring extending from the first shaft end portion to the second shaft end portion;
a first hard-wiring terminal to which a first wiring end of the electrical wiring is connected, the first hard-wiring terminal being attached to the first shaft end portion of the shaft member; and
a second hard-wiring terminal to which a second wiring end of the electrical wiring is connected, the second hard-wiring terminal being attached to the second shaft end portion of the shaft member.

### EFFECTS OF THE INVENTION

In the present invention, a shaft member provided with electrical wiring and hard-wiring terminals is positioned in a hollow portion. The electrical wiring positioned through the hollow portion does not interfere with the ends or other portions of the hollow portion, making it possible to reduce the risk of disconnection. Additionally, there are fewer constraints on the quantity and wire diameter of the wiring than when a requisite quantity of electrical wiring is threaded through the hollow portion. Furthermore, an advantage is presented in that wiring work is simplified.

### BRIEF DESCRIPTION OF THE DRAWINGS

FIG. 1 is a schematic longitudinal cross-sectional view showing one example of a hollow strain wave gearing to which the present invention is applied; and
FIG. 2 is an explanatory drawing showing one example of an actuator to which the present invention is applied.

### MODE FOR CARRYING OUT THE INVENTION

Embodiments in which the present invention is applied are described below with reference to the accompanying drawings. The description below illustrates a case where the present invention is applied to a strain wave gearing that is a geared reducer, but the present invention is similarly applicable to reducers other than strain wave gearings, as well as to hollow electric motors, actuators that are provided with electric motors and reducers, and other machines provided with hollow portions for electrical wiring.

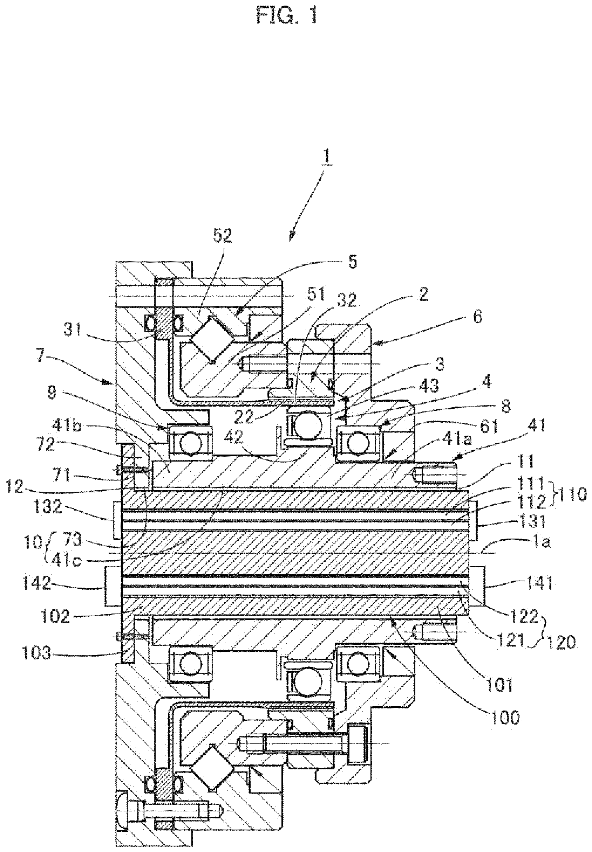

FIG. 1 is a schematic longitudinal cross-sectional view showing a hollow strain wave gearing. A body component (machine body) of the strain wave gearing 1 is provided with an annular rigid internally toothed gear 2, a top-hat-shaped flexible externally toothed gear 3 positioned coaxially inside the internally toothed gear 2, a wave generator 4 positioned coaxially inside the externally toothed gear 3, a cross roller bearing 5 that supports the internally toothed gear 2 and internally toothed gear 3 in a state allowing relative rotation, and a first end plate 6 and a second end plate 7 that are formed in a disc shape.

The first and second end plates 6, 7 face each other across a fixed gap along the direction of an axis 1a. The internally toothed gear 2, externally toothed gear 3, wave generator 4, and cross roller bearing 5 are positioned between the first and second end plates 6, 7. An inner race 51 of the cross roller bearing 5 is securely and coaxially fixed to an outer-peripheral-side section of the first end plate 6 so as to sandwich the internally toothed gear 2 therewith. An outer race 52 of the cross roller bearing 5 is securely and coaxially fixed to an outer-peripheral-side section of the second end plate 7 so as to sandwich an annular boss 31 of the internally toothed gear 3 therewith.

The wave generator 4 positioned inside the externally toothed gear 3 is provided with a hollow input shaft 41, an ellipsoidally contoured plug 42 that is formed integrally with the outer peripheral surface of the hollow input shaft 41, and a wave bearing 43 that is mounted on the ellipsoidal outer peripheral surface of the plug 42. A first shaft end portion 41a of the hollow input shaft 41 is rotatably supported on an inner peripheral portion of the first end plate 6 with ball bearings 8 interposed therebetween, and a second shaft end portion 41b on the other side of the hollow input shaft 41 is rotatably supported on an inner peripheral portion of the second end plate 7 with ball bearings 9 interposed therebetween.

The first shaft end portion 41a of the hollow input shaft 41 protrudes outward from an outer-side end surface 61 of the first end plate 6. The second shaft end portion 41b on the other side of the hollow input shaft 41 faces an annular inner-peripheral-side flange 72 formed on the second end plate 7 along the direction of the axis 1a. A hollow portion 10 extending through a central portion of the strain wave gearing 1 in the direction of the axis 1a is formed from a hollow portion 41c of the hollow input shaft 41 and a hollow hole 73 defined by a circular inner peripheral surface of the inner-peripheral-side flange 72 of the second end plate 7. A first open end 11 on one side of the hollow portion 10 in the direction of the axis 1a is exposed to the outside from the end surface 61 of the first end plate 6, and a second open end 12 on the other side of the hollow portion 10 is exposed to the outside from an end surface 71 of the second end plate 7.

In the strain wave gearing 1 configured in this manner, a portion of the externally toothed gear 3 where external teeth are formed is caused to flex into an ellipsoidal shape by the wave generator 4, and external teeth 32 positioned on both ends on a long axis of the ellipsoidal shape mesh with internal teeth 22 of the internally toothed gear 2. Rotation is delivered by an electric motor or the like (not shown) to the hollow input shaft 41 of the wave generator 4. When the wave generator 4 rotates, the positions where the externally toothed gear 3 meshes with the internally toothed gear 2 move in the circumferential direction, and the two gears undergo relative rotation caused by a difference between the numbers of teeth. The externally toothed gear 3 is attached to the second end plate 7, which is a fixed-side member, and the internally toothed gear 2 rotates. The rotation of the internally toothed gear 2 is delivered to a load (not shown) via the first end plate 6, to which the internally toothed gear 2 is attached.

A columnar shaft member 100 for wiring is loosely (rotatably) and coaxially positioned in the hollow portion 10. A first shaft end portion 101 on one side of the shaft member 100 in the direction of the axis 1a is exposed from the first open end 11 of the hollow portion 10, and a second shaft end portion 102 on the other side of the shaft member 100 is exposed from the second open end 12 of the hollow portion 10. In the present example, an outer-peripheral-side flange 103 formed in the shape of a large-diameter disc is formed integrally with the second shaft end portion 102, the outer-peripheral-side flange 103 being securely and coaxially fixed to the inner-peripheral-side flange 72 of the second end plate 7.

A plurality of electrical wiring bundles, e.g., two electrical wiring bundles 110, 120, that extend parallel to the axis 1a are positioned inside the shaft member 100 from the first shaft end portion 101 to the second shaft end portion 102. The electrical wiring bundles 110, 120 are respectively provided with, e.g., two electrical wirings 111, 112 and two electrical wirings 121, 122. The quantity of electrical wiring is not limited to two, and various forms, such as linear or curved, can be employed for arranging the electrical wiring.

Connectors 131 and 141, which are first hard-wiring terminals, are attached to the end surface of the first shaft end portion 101 of the shaft member 100, and connectors 132 and 142, which are second hard-wiring terminals, are attached to the end surface of the second shaft end portion 102 on the other side of the shaft member 100. One wiring end of each of the electrical wirings 111, 112 in the electrical wiring bundle 110 is connected to the connector 131, and the other wiring end of each of the electrical wirings 111, 112 is connected to the connector 132. Similarly, one wiring end of each of the electrical wirings 121, 122 in the electrical wiring bundle 120 is connected to the connector 141, and the other wiring end of each of the electrical wirings 121, 122 is connected to the connector 142. Connectors for external electrical wiring (not shown) can be respectively connected to the connectors 131, 141 on the first-end-plate 6 side, and connectors for external electrical wiring (not shown) can be respectively connected to the connectors 132, 142 on the second-end-plate 7 side. As shall be apparent, it is also permissible to position a terminal block in lieu of the connectors 131, 132, 141, 142 and enable the external electrical wirings to be hard-wired to terminals of the terminal block.

The shaft member 100, which is provided with the plurality of electrical wirings and hard-wiring terminals, can be configured as, e.g., an insert-molded component obtained by injection molding using a thermoplastic resin in a state in which the electrical wiring is inserted into a molding mold. Additionally, the shaft member 100 can be configured as a three-dimensionally molded component (MID) obtained using a 3D printer. Furthermore, the shaft member 100 can be configured as a board-incorporating component (board-embedding component) having a configuration in which a printed wiring board or flexible printed wiring board is incorporated (embedded) in the interior. A variety of structures and methods for manufacturing a shaft member provided with electrical wiring can be employed.

In the strain wave gearing 1 in the present example configured as described above, the shaft member 100, which is provided with the plurality of electrical wirings 111, 112, 121, 122 and connectors 131, 132, 141, 142, is positioned in the hollow portion 10 for electrical wiring, which extends through the central portion of the strain wave gearing 1. Each of the connectors 131, 141, 132, 142 attached to the first and second shaft end portions 101, 102 on the two sides of the shaft member 100 is exposed to the outside from the end surfaces 61, 71. When performing wiring work, it is permissible to merely connect external wiring or the like to the terminals of the connectors 131, 141, 132, 142 that are exposed to the outside. A wiring state identical to that when a requisite quantity of electrical wiring is threaded through the hollow portion 10 is thereby obtained.

The electrical wirings 111, 112, 121, 122 do not contact the hollow input shaft 41 in which the hollow portion 10 is formed, the end of the second end plate 7, or other such portions, making it possible to reduce the risk of disconnection caused by sliding or twisting. Additionally, it is possible to use an insert-molded component, a three-dimensionally molded component, a board-incorporating component, or the like as the shaft member provided with the electrical wiring, mitigating constraints on the quantity and wire diameter of the wiring over cases where the electrical wiring is threaded directly through the hollow portion 10. Furthermore, the need for work to lead the requisite quantity of electrical wiring from one shaft end of the hollow shaft through the hollow portion out from the other end of the hollow shaft is obviated, and work to connect the electrical wiring that has been threaded through the hollow portion to external wiring or the like is simplified.

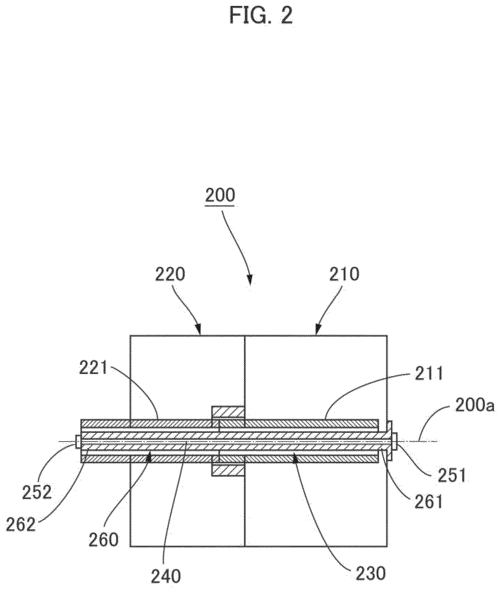

FIG. 2 is an explanatory drawing showing one example of an actuator to which the present invention is applied. A machine body portion of the actuator 200 shown in FIG. 2 is provided with an electric motor 210 and a reducer 220 that are positioned coaxially. The electric motor 210 is provided with a hollow rotating shaft 211, and the reducer 220 is provided with a hollow input shaft 221. The hollow rotating shaft 211 and the hollow input shaft 221 are coaxially linked, thereby forming a hollow portion 230 extending through the machine body portion in the direction of an axis 200a. A shaft member 260 provided with electrical wiring 240 and hard-wiring terminals 251, 252 is loosely (rotatably) and coaxially positioned in the hollow portion 230.

A first hard-wiring terminal 251 is attached to a first shaft end part 261 of the shaft member 260, the first hard-wiring terminal 251 being exposed from a motor-side open end of the hollow portion 230. Similarly, a second hard-wiring terminal 252 is attached to a second shaft end part 262 of the shaft member 260, the second hard-wiring terminal 252 being exposed from a reducer-side open end of the hollow portion 230.

The actuator 200 provided with a hollow portion for electrical wiring configured in this manner also exhibits the same effect as in the case of the strain wave gearing 1 shown in FIG. 1.

## Claims

1. A machine provided with a hollow portion for electrical wiring, comprising:
a machine body;
the hollow portion extending through a central portion of the machine body in an axial direction;
a shaft member positioned in the hollow portion;
a first shaft end portion of the shaft member, the first shaft end portion being exposed at a first open end on one side of the hollow portion;
a second shaft end portion of the shaft member, the second shaft end portion being exposed at a second open end on the other side of the hollow portion;
electrical wiring positioned inside the shaft member or integrally molded with the shaft member, the electrical wiring extending from the first shaft end portion to the second shaft end portion;
a first hard-wiring terminal to which a first wiring end of the electrical wiring is connected, the first hard-wiring terminal being attached to the first shaft end portion of the shaft member; and
a second hard-wiring terminal to which a second wiring end of the electrical wiring is connected, the second hard-wiring terminal being attached to the second shaft end portion of the shaft member.

2. The machine provided with the hollow portion for electrical wiring according to claim 1, further comprising:
a hollow shaft provided with the hollow portion;
the hollow shaft extending through the central portion of the machine body in the axial direction, a first shaft end portion on one side of the hollow shaft being exposed from the first open end of the hollow portion, and a second shaft end portion on the other side of the hollow shaft being exposed from the second open end of the hollow portion.

3. The machine provided with the hollow portion for electrical wiring according to claim 2, wherein
the shaft member is
an insert-molded circuit component with which the electrical wiring is integrated through insert molding,
a three-dimensionally molded circuit component with which the electrical wiring is integrally molded, or
a board-incorporating component in which is incorporated a printed wiring board on which the electrical wiring is printed.

4. The machine provided with the hollow portion for electrical wiring according to claim 2, wherein
the machine body is provided with a reducer,
the hollow shaft is an input shaft for the reducer,
the shaft member extends loosely or rotatably through the hollow portion of the input shaft, and
the first shaft end portion or second shaft end portion of the shaft member is attached to a fixed-side member of the reducer.

5. The machine provided with the hollow portion for electrical wiring according to claim 2, wherein
the machine body is provided with an electric motor,
the hollow shaft is a rotating shaft of the electric motor,
the shaft member extends loosely or rotatably through the hollow portion of the rotating shaft, and
the first shaft end portion or second shaft end portion of the shaft member is attached to a fixed-side member of the electric motor.

6. The machine provided with the hollow portion for electrical wiring according to claim 2, wherein:
the machine body is provided with an actuator provided with an electric motor and a reducer that are positioned coaxially;
the hollow shaft is provided with a rotating shaft of the electric motor and an input shaft of the reducer, the input shaft being coaxially linked to the rotating shaft;
the shaft member extends loosely or rotatably through the respective hollow portions of the rotating shaft and the input shaft; and
the first shaft end portion or second shaft end portion of the shaft member is attached to a fixed-side member of the actuator.

## Amended claims

### Amended claims under Art. 19.1 PCT

1. (Amended) A machine provided with a hollow portion for electrical wiring, comprising:
a machine body;
a hollow shaft provided with the hollow portion extending through a central portion of the machine body in an axial direction;
a shaft member positioned in the hollow portion;
a first shaft end portion of the shaft member, the first shaft end portion being exposed at a first open end on one side of the hollow portion;
a second shaft end portion of the shaft member, the second shaft end portion being exposed at a second open end on the other side of the hollow portion;
electrical wiring positioned inside the shaft member or integrally molded with the shaft member, the electrical wiring extending from the first shaft end portion to the second shaft end portion;
a first hard-wiring terminal to which a first wiring end of the electrical wiring is connected, the first hard-wiring terminal being attached to the first shaft end portion of the shaft member; and
a second hard-wiring terminal to which a second wiring end of the electrical wiring is connected, the second hard-wiring terminal being attached to the second shaft end portion of the shaft member,
wherein
the machine body is at least one of a reducer and an electric motor,
the hollow shaft is a hollow input shaft of the reducer in a case in which the machine body is the reducer, and is a hollow rotating shaft of the electric motor in a case in which the machine body is the electric motor,
the shaft member extends loosely through the hollow portion of the hollow shaft, and
the first shaft end portion or second shaft end portion of the shaft member is attached to a fixed-side member of the reducer or the electric motor.

2. (Amended) The machine provided with the hollow portion for electrical wiring according to claim 1,
wherein
the machine body is an actuator provided with the electric motor and the reducer that are positioned coaxially;
the hollow shaft is provided with the hollow rotating shaft of the electric motor and the hollow input shaft of the reducer, the hollow input shaft being coaxially linked to the hollow rotating shaft;
the shaft member extends loosely through the respective hollow portions of the hollow rotating shaft and the hollow input shaft; and
the first shaft end portion or second shaft end portion of the shaft member is attached to a fixed-side member of the actuator.

3. (Amended) The machine provided with the hollow portion for electrical wiring according to claim 1 or 2, wherein
the shaft member is
an insert-molded circuit component with which the electrical wiring is integrated through insert molding,
a three-dimensionally molded circuit component with which the electrical wiring is integrally molded, or
a board-incorporating component in which is incorporated a printed wiring board on which the electrical wiring is printed.

4. (Deleted)

5. (Deleted)

6. (Deleted)
